## Europäisches Patentamt
## European Patent Office
## Office européen des brevets

(19)

(11) Veröffentlichungsnummer: **0 193 067 B1**

(12)
# EUROPÄISCHE PATENTSCHRIFT

(45) Veröffentlichungstag der Patentschrift:
26.07.89

(51) Int. Cl.⁴: **H02K 3/28, H02P 7/628**

(21) Anmeldenummer: **86101992.5**

(22) Anmeldetag: **17.02.86**

(54) **Von einer Mehrphasen-Direktumrichteranordnung gespeister Drehstrommotor.**

(30) Priorität: **27.02.85 DE 3506996**

(43) Veröffentlichungstag der Anmeldung:
**03.09.86 Patentblatt 86/36**

(45) Bekanntmachung des Hinweises auf die Patenterteilung:
**26.07.89 Patentblatt 89/30**

(84) Benannte Vertragsstaaten:
**AT DE FR GB SE**

(56) Entgegenhaltungen:
**DE-A- 2 743 699**
**DE-B- 2 641 294**
**US-A- 3 624 472**

(73) Patentinhaber: **Siemens Aktiengesellschaft Berlin und München, Wittelsbacherplatz 2, D-8000 München 2(DE)**

(72) Erfinder: **Hollman, Rolf, Stolzstrasse 5, D-8522 Herzogenaurach(DE)**

EP 0 193 067 B1

ACTORUM AG

## Beschreibung

Die Erfindung betrifft einen von einer Mehrphasen-Direktumrichteranordnung gespeisten Drehstrommotor.

Es ist beispielsweise aus "Elektrotechnische Zeitschrift" 1932, Heft 32, Seiten 761 bis 786 bekannt, Gleichrichteranordnungen mit steuerbaren Gleichrichtern auszustatten und diese mit Hilfe der sogenannten Phasenanschnittsteuerung zur Frequenzumrichtung mehrphasiger Netzspannungen zu benutzen. Mit Hilfe solcher Mehrphasen-Direktumrichteranordnungen ist es möglich, Amplitude und Frequenz der aus einem Drehstromnetz entnommenen Spannung kontinuierlich zu verringern, so daß sich die Drehzahl eines angeschlossenen Drehstrommotors entsprechend variieren läßt. Solche mit Thyristoren ausgerüstete Mehrphasen-Direktumrichteranordnungen sind in dem Buch "Netzgeführte Stromrichter mit Thyristoren" von Möltgen, 2. Auflage unter dem Titel "Direktumrichter" auf Seite 311 ff. beschrieben. Mit Hilfe der dort auf Seite 315 angegebenen Schaltung eines Drehstrom-Drehstrom-Umrichters läßt sich die Drehzahl von Drehfeldmaschinen in einem weiten Bereich steuern. Der Nachteil des dort in Bild 247 dargestellten Direktumrichters, der aus drei mit Thyristoren bestückten Drehstrom-Vollweggleichrichtern gebildet ist, besteht vor allem darin, daß jedem dieser Drehstrom-Vollweggleichrichter ein eigener Transformator zugeordnet werden muß. Dies ist notwendig, weil bei einer Parallelschaltung der drei Gleichrichter an einer einzigen Sekundärwicklung eines Transformators in den Überschneidungsbereichen der Steuerung über die Sternpunktverbindung Kurzschlußströme auftreten können, die zu einer Überlastung der Anordnung führen würden. Durch eine galvanische Entkopplung auf der Transformatorseite wird dies verhindert.

Außerdem würden beim Parallelbetrieb der Umrichter an einer einzigen Sekundärwicklung eines Transformators bei der bevorzugten trapezförmigen Umrichter-Ausgangsspannung starke Oberwellenströme der dritten Harmonischen auftreten, die ebenfalls eine Überlastung der Umrichteranordnung bewirken können. Würde man, um dies zu verhindern, die Umrichteranordnung so steuern, daß sie eine sinusförmige Ausgangsspannung erzeugt, wäre der Transformator nur unzureichend ausgelastet, würde also mit einem schlechten Leistungsfaktor arbeiten und im übrigen würde dies den netzseitigen Oberwellengehalt unnötig erhöhen, was wiederum die Bauleistung des Transformators beeinträchtigen würde.

Der Erfindung liegt die Aufgabe zugrunde, die Wicklung eines von Mehrphasen-Direktumrichtern gespeisten Elektromotor bei gleichbleibendem Kupferanteil so zu gestalten, daß die Umrichter auch bei trapezförmiger Ausgangsspannung in eingangsseitiger Parallelschaltung an einer einzigen Spannungsquelle betrieben werden können, ohne dabei die Oberwellenströme in der Motorwicklung zu erhöhen.

Durch die im Patentanspruch 1 angegebene Erfindung ist diese Aufgabe dadurch gelöst, daß die direkte galvanische Kopplung der Umrichter untereinander vermieden und durch Schaffung eines zweiten Motorstromkreises ersetzt ist, so daß auf den vergleichsweise großen transformatorseitigen Aufwand verzichtet werden kann, ohne den motorseitigen Aufwand nennenswert zu erhöhen. Dabei ergibt sich gleichzeitig die Möglichkeit, mit der für die Bauleistung der Transformatoren günstigen trapezförmigen Speisespannung bei je nach Schaltungsart vollständiger oder fast vollständiger Unterdrückung des von der dritten Harmonischen hervorgerufenen Stromes zu arbeiten.

Darüberhinaus können mehrere Umrichtersysteme an den gleichen Transformator bzw an das gleiche Netz ohne Zwischentransformator angeschlossen werden.

Aus der US-PS 3 624 472 ist es für sich bereits bekannt, einen Drehstrom-Induktionsmotor mit zwei, je für die volle Leistung ausgelegte komplette Drehstrom-Wicklungssysteme auszustatten, deren parallelliegende Phasenwicklungen je einen Drehstrompol bilden, so daß insgesamt sechs Wicklungen vorhanden sind, von denen jede für sich an einen Einwegumrichter eines von der Sekundärwicklung eines Drehstromtransformators gespeisten steuerbaren Drehstrom-Umrichtersystems angeschlossen ist. Dabei muß jede der beiden Drehstromwicklungen für die volle Motorleistung ausgelegt sein. Damit soll erreicht werden, daß nur die Hälfte der insgesamt vorhandenen Gleichrichter des Umrichtersystems als steuerbare Gleichrichter und die andere Hälfte als einfache Diodengleichrichter ausgebildet sein können. Außerdem sollen durch die motorseitige galvanische Trennung der einzelnen Gleichrichter des Umrichtersystems von Fehlzündungen der gesteuerten Gleichrichter oder von induktiven Rückwirkungen verursachte Kurzschlüsse im Umrichtersystem vermieden werden.

Weitere Ausgestaltungen der Erfindung sind in den Unteransprüchen gekennzeichnet.

Anhand von Ausführungsbeispielen wird die Erfindung im folgenden näher erläutert. Es zeigen:

Fig. 1 das Prinzipschaltbild und
Fig. 2 bis 7 verschiedene Ausführungsmöglichkeiten der erfindungsgemäßen Anordnung.

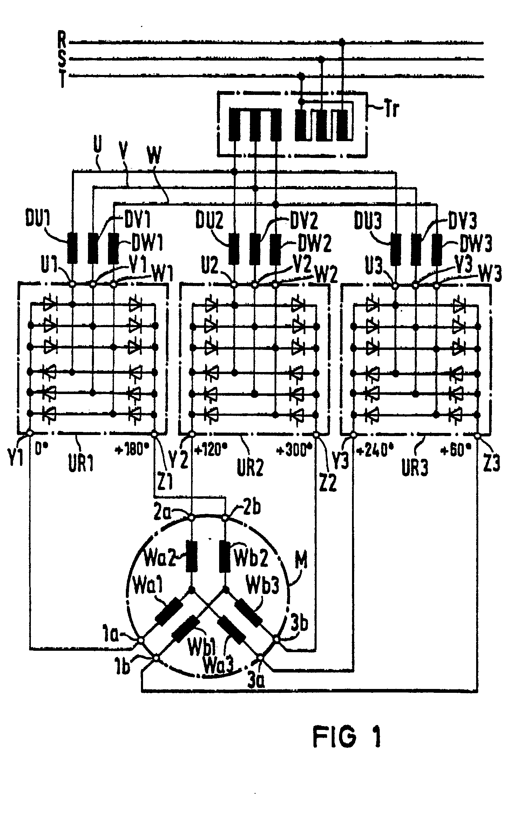

In Fig. 1 besitzt der nur schematisch dargestellte Drehstrom-Elektromotor M ein dreipoliges, in Stern geschaltetes Drehfeld-Spulensystem mit den Spulenpaaren $W_{a1}$, $W_{b1}$; $W_{a2}$, $W_{b2}$ und $W_{a3}$, $W_{b3}$. Die einzelnen Pole sind dabei um 120° gegeneinander versetzt angeordnet. Die Spulen $W_{a1}$, $W_{a2}$ und $W_{a3}$ bilden das eine Spulensystem und die Spulen $W_{b1}$, $W_{b2}$ und $W_{b3}$ das zweite Spulensystem. Beide Spulensysteme sind geometrisch möglichst deckungsgleich und elektrisch gegeneinander isoliert aufgebaut. Mit anderen Worten: Die bisher übliche Drehfeldspule eines Drehstrommotors ist in zwei geometrisch deckungsgleiche, gleichwertige, galvanisch getrennte Spulensysteme aufgeteilt. Diese Spulensysteme sind mit den motorseitigen Anschlüssen einer dreiphasigen Umrichteranordnung UR1, UR2 und UR3 so verbunden, daß jeder der beiden Ausgänge der eineinzelnen Umrichter des Umrichtersystems an eines der beiden Spulensysteme angeschlossen ist, die keine galvanische Verbindung untereinander aufweisen. Im vorliegen den Beispiel sind die einen Pole der Umrichteranordnung Y1, Y2 und Y3 mit den Anschlüssen 1a, 2a, 3a des einen Spulensystems und die anderen Anschlüsse der Umrichter Z1, Z2 und Z3 mit den Anschlüssen 1b, 2b, 3b des anderen Spulensystems der Drehfeldwicklung des Motors M verbunden. Dabei weisen die beiden motorseitigen Anschlüsse jedes Umrichters eine Phasenverschiebung von 180° auf, während die Umrichter untereinander um 120° in der Phase verschobene Spannungen liefern. Dadurch beträgt die Phasenverschiebung der in den beiden Spulen eines Spulenpaares eines Poles der Drehfeldwicklung fließenden Ströme 60°. Die primärseitigen Anschlüsse der einzelnen Umrichter U1, V1, W1; U2, V2, W2 und U3, V3, W3 sind über Kommutierungsdrosseln $D_{U1}$, $D_{V1}$, $D_{W1}$; $D_{U2}$, $D_{V2}$, $D_{W2}$ sowie $D_{U3}$, $D_{V3}$, $D_{W3}$ parallel an die Sekundärwicklung eines Transformators angeschlossen, dessen Primärwicklung mit dem Speisenetz RST verbunden ist.

Durch die Aufteilung jeder Wicklung einer Phase in zwei Teile und die Reihenschaltung zweier Teilwicklungen unterschiedlicher Phase ist erreicht, daß die Oberschwingungsströme der dritten Ordnung bei trapezförmiger Umrichterausgangsspannung auf etwa 1/4 derjenigen Werte reduziert sind, die bei der bekannten Direktumrichter-Schaltung auftreten würden.

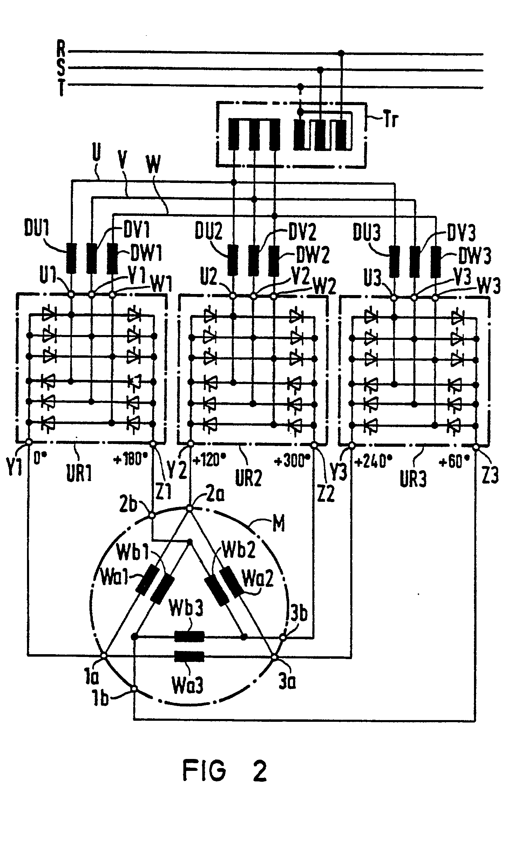

In Fig. 2 ist eine Schaltungsanordnung gezeigt, bei der die beiden parallelen Spulensysteme in Dreieck geschaltet sind. Jeder der beiden Ausgängen Y, Z eines jeden Umrichters ist dabei mit den Anschlüssen je eines der beiden Spulensysteme verbunden, wobei die in jeder der ein Spulenpaar bildenden Spulen beider Systeme fließenden Ströme wiederum eine Phasenverschiebung von 60° zueinander aufweisen.

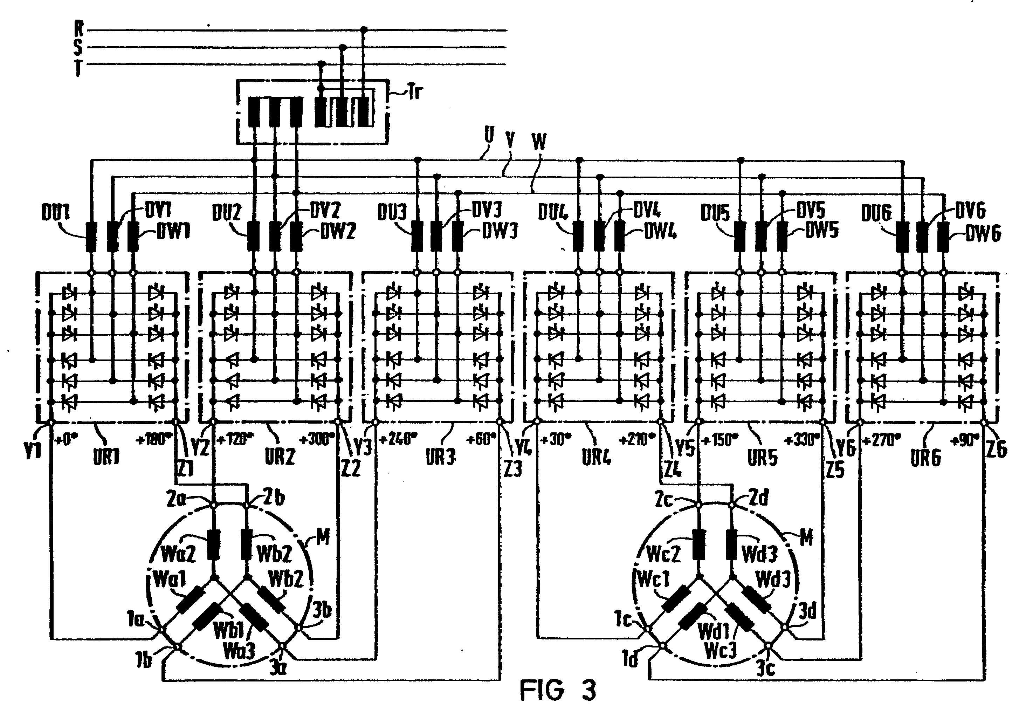

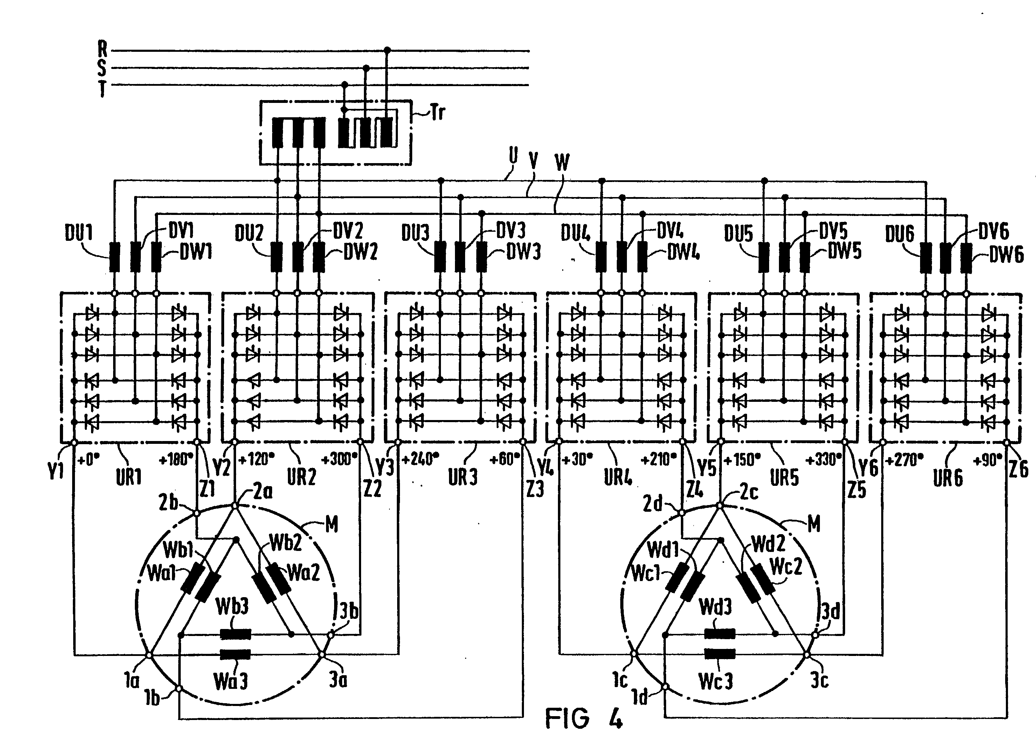

Wenn aufgrund der Rückwirkung auf das Speisenetz eine höherer Pulsigkeit gewünscht wird, können die Schaltungsanordnungen nach den Fig. 1 und 2 dadurch vervielfacht werden, daß entsprechend den in den Fig. 3 und 4 dargestellten Schaltungen die Anzahl der Drehfeldwicklungen im Motor und demzufolge auch die Anzahl der Umrichteranordnungen vervielfacht wird, die eingangsseitig parallel an einem einzigen Transformator angeschlossen sind. So sind etwa die beiden Wicklungen $W_{a1}$, $W_{a2}$, $W_{a3}$ und $W_{b1}$, $W_{b2}$, $W_{b3}$ in den Fig. 3 und 4 durch eine weitere Drehfeldwicklung in Stern-bzw. Dreieckschaltung mit den Spulensystemen $W_{C1}$, $W_{C2}$ und $W_{C3}$ sowie dem dazu parallen System mit den Spulen $W_{D1}$, $W_{D2}$ and $W_{D3}$, mit einem geometrischen Versatz von 30° und einer entsprechenden elektrischen Phasenverschiebung mit der weiteren Umrichteranordnung, bestehend aus den Umrichtern UR4, UR5 und UR6 sowie den Kommutierungsdrosseln $D_{U4}$ bis $D_{W6}$ verdoppelt.

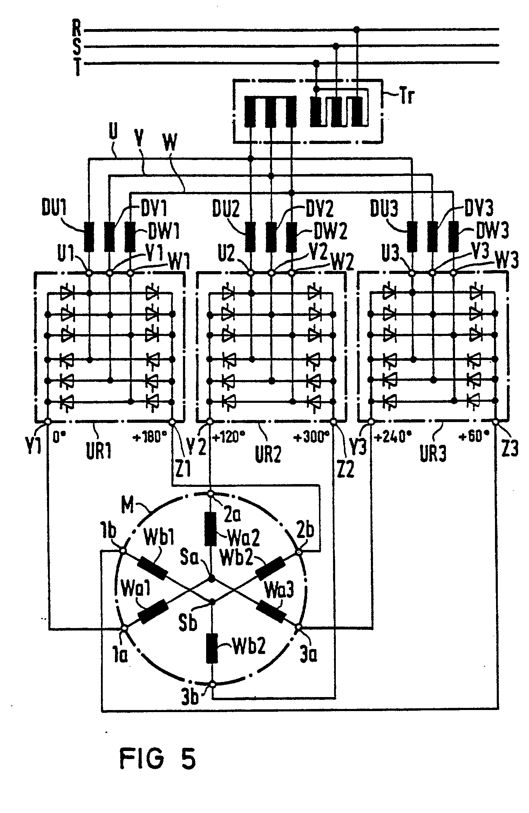

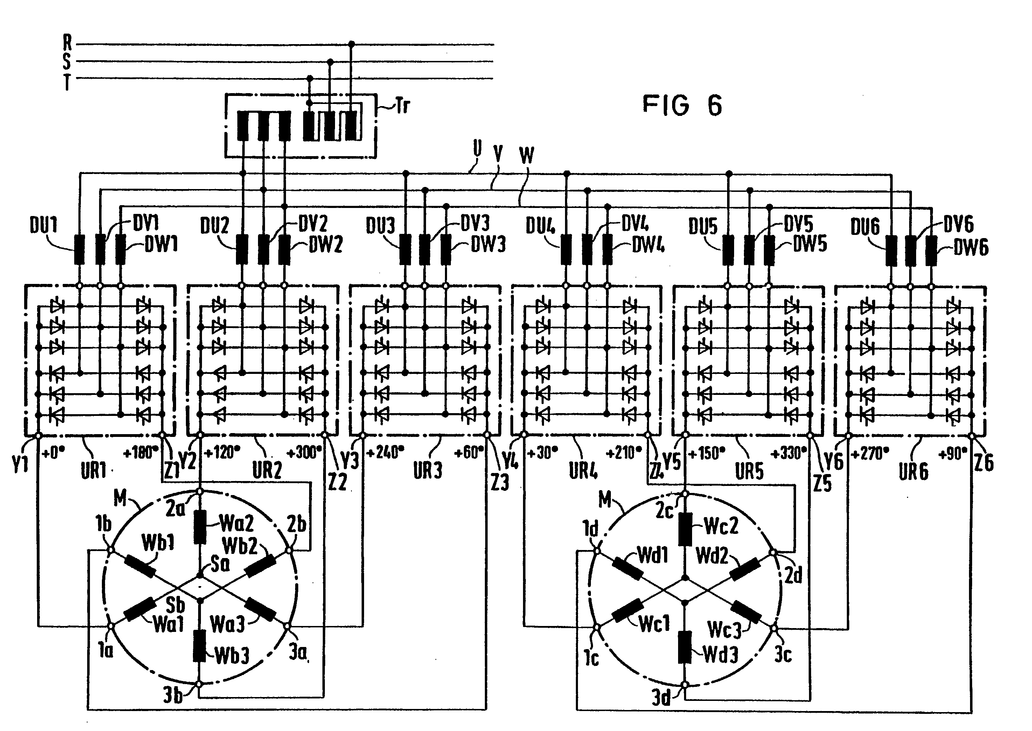

Eine Variante der Anordnung nach Fig. 1 ist in Fig. 5 dargestellt. Bei dieser Schaltungsanordnung sind die in Stern geschalteten Spulensysteme mit den Spulen $W_{A1}$, $W_{A2}$ und $W_{A3}$ sowie $W_{B1}$, $W_{B2}$ und $W_{B3}$ geometrisch so angeordnet, daß die Spulen des einen Systems geometrisch zwischen den Spulen des anderen Systems liegen und demzufolge eine sechsphasige Drehfeldwicklung bilden. Die elektrischen Anschlüsse entsprechen denjenigen nach Fig.1. Auch diese Schaltung kann, wie bereits beschrieben, vervielfacht werden, so daß, wie in Fig. 6 gezeigt, mit zwei Umrichteranordnungen ebenfalls eine 12-pulsige Neztrückwirkung erzielbar ist. Die Anordnung nach Fig. 5 kann (in entsprechender Abwandlung nach Fig. 2) diejenige nach Fig. 6 (in entsprechender Abwandlung nach Fig. 4) auch in Dreieckschaltung betrieben werden.

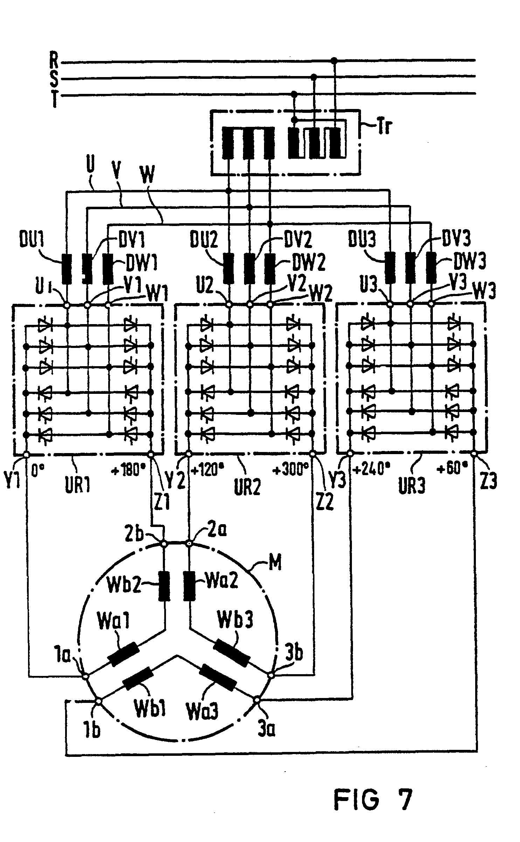

Schließlich ist in Fig. 7 eine Ausführungsvariante der Anordnung nach Fig. 1 dargestellt, bei der drei aus je zwei Spulen bestehende Wicklungssysteme vorgesehen sind. Wie bei der Sternschaltung nach Fig. 1 sind wiederum je Pol bzw. Phase zwei parallelliegende Spulen $W_{a1}$, $W_{b1}$; $W_{a2}$, $W_{b2}$ sowie $W_{a3}$ und $W_{b3}$ vorhanden. Je zwei Spulen benachbarter Pole bzw. Phasen und unterschiedlicher Systeme $W_{a1}$, $W_{b2}$; $W_{a2}$, $W_{b3}$ sowie $W_{a3}$, $W_{b1}$ sind in Serie geschaltet an die Ausgangsklemmen je eines Umrichters UR1, UR2 bzw. UR3 angeschlossen. Bei dieser Schaltung sind die einzelnen Umrichter motorseitig galvanisch voneinander getrennt. Mit ihr ist die gleiche Wirkung zu erzielen wie mit den bisher beschriebenen Anordnungen.

Selbstverständlich sind die in den Figuren 5 und 6 gezeigten Schaltungsanordnungen mit in Stern geschalteten Spulensystemen auch in Dreieckanordnungen möglich und führen zu den gleichen Ergebnissen.

Neben den gezeigten Schaltungsbeispielen sind weitere Ausführungsvarianten, z.B. 4-Phasen-Systeme denkbar, denen gemeinsam ist, daß sie motorseitige nicht unmittelbar galvanisch miteinander verbunden sind.

**Patentansprüche**

1. Von einer Mehrphasen-Direktumrichteranordnung gespeister Drehstrommotor (M) zur Erzeugung einer Drehbewegung seines drehbaren Teiles (Rotor) gegenüber seinem feststehenden Teil (Stator), dessen Drehfeldwicklung aus zwei elektrisch getrennten Spulensystemen ($W_{a1}$, $W_{a2}$, $W_{a3}$; $W_{b1}$, $W_{b2}$, $W_{b3}$) besteht, deren die Pole des Motors bildenden Spulenpaare geometrisch deckungsgleich oder spiegelsymmetrisch angeordnet sind, **dadurch gekennzeichnet**, daß die Umrichteranordnung aus Drehstrom-Vollweg-Umrichtern (UR1, UR2, UR3) gebildet ist, deren eingangsseitige Anschlüsse U1, V1, W1; U2, V2, W2; U3, V3, W3) parallel an ein Speisenetz (R, S, T) oder an die Sekundärwicklung eines Transformators (Tr) angeschlossen sind, und die beiden Drehstrom-Spulensysteme ($W_{a1}$, $W_{a2}$, $W_{a3}$ imd $W_{b1}$, $W_{b2}$, $W_{b3}$) mit ihren polbildenden Spulenpaaren so dimensioniert sind, daß jedes Spulensystem die halbe elektrische Leistung übernimmt und die einen ausgangsseitigen Anschlüsse (Y1, Y2, Y3) der Umrichteranordnung mit den Anschlüssen (1a, 2a, 3a) des einen Spulensystems (W$_{a1}$, W$_{a2}$, W$_{a3}$) und die anderen Anschlüsse (Z1, Z2, Z3) der Umrichteranordnung mit den Anschlüssen (1b, 2b, 3b) des anderen Spulensystems (W$_{b1}$, W$_{b2}$, W$_{b3}$) elektrisch verbunden sind.

2. Anordnung nach Anspruch 1, **dadurch gekennzeichnet,** daß eine der polbildenden Spulen eines Poles des einen Spulensystems (z.B. W$_{a1}$) mit derjenigen des anderen Spulensystems (z.B. W$_{b2}$) eines benachbarten Poles eine Serienschaltung bilden, die an je einen Anschlußpol (Y1, Z1; Y2, Z2; Y3, Z3) eines Umrichters (UR1, UR2, UR3) angeschlossen ist, derart, daß die durch die Spulen eines polbildenden Spulenpaares fließenden Ströme eine Phasenverschiebung von 60° aufweisen.

3. Anordnung nach Anspruch 1 oder 2, **dadurch gekennzeichnet,** daß der Drehstrommotor (M) mehrere umfangsymmetrisch angeordnete Drehfeldwicklungen aus je zwei Spulensystemen mit diesen zugeordneten, eingangsseitig parallelgeschalten Umrichtern besitzt.

## Claims

1. Three-phase motor (M) supplied by a multiphase direct converter arrangement for producing a rotary movement of its rotatable part (rotor) with respect to its fixed part (stator), the rotary field winding of which consists of two electrically separate coil systems (W$_{a1}$, W$_{a2}$, W$_{a3}$; W$_{b1}$, W$_{b2}$, W$_{b3}$), the coil pairs of which, forming the poles of the motor, are arranged in a geometrically coincident or mirror-symmetrical manner, characterised in that the converter arrangement is formed of three-phase current-full wave-converters (UR1, UR2, UR3), the connection (U1, V1, W1; U2, V2, W2; U3, V3, W3) of which on the input side are connected in paralled to a supply network (R, S, T) or to the secondary winding of a transformer (Tr) and the two three-phase current-coil systems (W$_{a1}$, W$_{a2}$, W$_{a3}$; W$_{b1}$, W$_{b2}$, W$_{b3}$) with their pole-forming coil paris are dimesioned such that each coil system takes on half the electrical energy and the one connections (Y1, Y2, Y3) on the output side of the converter arrangement are electrically connected with the connections (1a, 2a, 3a) of the one coil system (W$_{a1}$, W$_{a2}$, W$_{a3}$) and the other connections (Z1, Z2, Z3) of the converter arrangement are electrically connected with (W$_{b1}$, W$_{b2}$, W$_{b3}$).

2. Arrangement according to claim 1, characterised in that one of the pole-forming coils of one pole of the one coil system (e.g. W$_{a1}$) together with that of the other coil system (e.g. W$_{b2}$) of an adjacent pole form a series circuit, which is connected to a respective connection pole (Y1, Z1; Y2, Z2; Y3, Z3) of a converter (UR1, UR2, UR3) such that the currents flowing through the coils of a pole-forming coil pair have a phase displacement of 60°.

3. Arrangement according to claim 1 or 2, characterised in that the three-phase current motor (M) has several rotary field windings, which are arranged in a periphery-symmetrical manner and consist of, in each case, two coil systems with converters associated with the latter and connected in parallel on the input side.

## Revendications

1. Moteur triphasé (M) alimenté par un dispositif de conversion directe plyphasé, servant à produire un mouvement de rotation de sa partie rotative (rotor) par rapport à sa partie fixe (stator), dont le bobinage à champ tournant est formé de deux systèmes de bobines (W$_{a1}$, W$_{a2}$, W$_{a3}$; W$_{b1}$, W$_{b2}$, W$_{b3}$) électriquement séparés et dont les paires de bobines formant les pôles du moteur sont disposées géométriquement à recouvrement ou symétriquement, caractérisé en ce que le dispositif de conversion est constitué de convertisseurs à pleine onde pour courant triphasé (UR1, UR2, UR3) dont les bornes côté entrée (U1, V1, W1; U2, V2, W2; U3, V3, W3) sont raccordées en parallèle à un réseau d'alimentation (R, S, T) ou à l'enroulement secondaire d'un transformateur (Tr), les deux systèmes de bobines triphasés (W$_{a1}$, W$_{a2}$, W$_{a3}$; W$_{b1}$, W$_{b2}$, W$_{b3}$) étant dimensionnés, par leurs paires de bobines formant les pôles, de manière que chaque système de bobines prenne en charge la moitié de la puissance électrique, une première série de bornes côté sortie (Y1, Y2, Y3) du dispositif de conversion est reliée aux bornes (1a, 2a, 3a) d'un système de bobines (W$_{a1}$, W$_{a2}$, W$_{a3}$) et les autres bornes (Z1, Z2, Z3) du dispositif de conversion sont reliées électriquement aux bornes (1b, 2b, 3b) de l'autre système de bobines (W$_{b1}$, W$_{b2}$, W$_{b3}$).

2. Dispositif selon la revendication 1, caractérisé en ce que l'une des bobines, formatrices de pôle, d'un pôle d'un système de bobines (par exemple W$_{a1}$) constitue un montage en série avec une bobine formatrice de pôle de l'autre système de bobines (par exemple W$_{b2}$) d'un pôle voisin, chaque montage en série étant branché sur les deux bornes de sortie (Y1, Z1; Y2, Z2; Y3, Z3) d'un convertisseur (UR1, UR2, UR3), de manière que les courants traversant les bobines d'une paire de bobines formant un pôle présentent un déphasage mutuel de 60°.

3. Dispositif selon la revendication 1 ou 2, caractérisé en ce que le moteur triphasé (M) possède plusieurs bobinages à champ tournant disposés symétriquement dans le sens circonférentiel et comprenant chacun deux systèmes de bobines, auxquel sont coordonnés des convertisseurs branchés en parallèle côté entrée.

**EP 0 193 067 B1**

**FIG 1**

FIG 2

FIG 3

FIG 4

EP 0 193 067 B1

FIG 5

FIG 6

FIG 7